# EUROPÄISCHE PATENTSCHRIFT

(11) **EP 1 890 817 B1**
(45) Veröffentlichungstag und Bekanntmachung des Hinweises auf die Patenterteilung: **18.05.2011**
(21) Anmeldenummer: 06723217.3
(22) Anmeldetag: 04.03.2006
(51) Int. Cl.: B01L 7/00

(54) **THERMOCYCLER**
THERMOCYCLER
THERMOCYCLEUR

(30) Priorität: 14.06.2005 DE 102005027555
(43) Veröffentlichungstag der Anmeldung: 27.02.2008
(73) Patentinhaber: EPPENDORF AG, 22339 Hamburg (DE)
(72) Erfinder: TASCH, Henner, 22397 Hamburg (DE); KRÜGER, Bernd, 22889 Tangstedt (DE)
(74) Vertreter: Emmel, Thomas
(86) Internationale Anmeldenummer: PCT/EP2006/001995
(87) Internationale Veröffentlichungsnummer: WO 2006/133749

(56) Entgegenhaltungen:
- US-A1- 2004 023 371
- US-A1- 2004 142 459
- US-A1- 2004 224 317
- US-B1- 6 852 986

## Beschreibung

Die Erfindung bezieht sich auf einen Thermocycler nach dem Oberbegriff des Anspruches 1.

Der Begriff Thermocycler bezeichnet generell Einrichtungen, in denen PUR-Reaktionen durchgeführt werden kann. PCR ist eine etablierte, Fachleuten bekannte Abkürzung für eine Methode, bei dem mit einer Polymerase in einer Probe enthaltene Target-Nukleinsäuren amplifiziert werden können.

Die vorliegende Erfindung betrifft Thermocycler, mit denen im Real-Time-Modus die Zunahme der amplifizierten Produkte über die Zeit gemessen werden kann. Solche Thermocycler weisen einen Basiskörper auf, in dem ein für die Durchführung von PCR-Reaktionen geeignet temperierbarer Aufnahmebereich für Reaktionsgefäße ausgebildet ist.

Weiterhin ist ein Deckel vorgesehen, der aus einer geöffneten Position in eine Arbeitsstellung über dem Aufnahmebereich verfahren werden.kann. In dem Dekkel ist eine Optikeinheit angeordnet, die in Arbeitsstellung dem Aufnahmebereich gegenüber liegt und Licht in die Reaktionsgefäße einstrahlen und/oder aus den Reaktionsgefäßen austretendes Licht aufnehmen kann.

In der Regel sind in Real-Time-PCR-Ansätzen Fluoreszenzfarbstoffe enthalten und die Optikeinheit sendet Anregungslicht in die Reaktionsgefäße und nimmt eventuell emittierte Fluoreszenz auf.

Üblicherweise sind in der Optikeinheit mehrere Lichtwege definiert, von denen jeweils einer einer Aufnahme für ein Reaktionsgefäß in dem Aufnahmebereich zugeordnet ist. Um eine fehlerfreie Messung zu gewährleisten ist wichtig, dass die Optikeinheit und der Aufnahmebereich während der PCR-Reaktion exakt zueinander justiert sind.

Eine Vorabjustierung ab Werk ist in den meisten Fällen nicht möglich. So werden Deckel und Basiskörper auf Grund ihres Gewichtes in der Regel getrennt verschifft. Weiterhin sind Basiskörper nicht zwingend auf die Benutzung im Real-Time-Verfahren beschränkt, sondern können vielmehr auch mit anderen Deckeln für konventionelle PCR-Verfahren verwendet werden.

In einer Reihe von Anwendungsfällen wird der Deckel also erst später, nachdem beide Einheiten das Werk verlassen haben, an dem Basiskörper montiert.

Aufgabe der Erfindung ist es, einen Thermocycler bereitzustellen, bei dem eine dauerhafte Justierung von Optikeinheit und Aufnahmebereich auch bei späterer Montage des Deckels an dem Basiskörper in besonders einfacher Weise möglich ist.

Gelöst wird die Aufgabe mit einer Vorrichtung, die die Merkmale des Anspruches 1 aufweist.

Bei dem erfindungsgemäßen Thermocycler ist vorgesehen, dass Optikeinheit und/oder Aufnahmebereich mit Spiel in dem Deckel bzw. Basiskörper aufgenommen sind. Das Spiel muss so ausgelegt sein, dass eine für eine Justierung der Optikeinheit zu dem Aufnahmebereich ausreichende Relativbewegung zwischen Optikeinheit und Aufnahmebereich möglich ist.

Weiterhin sind am Basiskörper und Deckel jeweils mindestens 2 Positioniereinrichtungen vorgesehen, wobei jeder Positioniereinrichtung am Basiskörper jeweils eine Positioniereinrichtung am Deckel zugeordnet ist. Jeweils mindestens eine dieser beiden einander zugeordneten Positioniereinrichtungen ist bezüglich ihrer Position zu dem Aufnahmebereich oder der Optikeinheit einstellbar und in einer eingestellten Position ortsfest zu dem Aufnahmebereich und/oder der Optikeinheit fixierbar.

Ein wesentlicher Effekt der Erfindung ist, dass der Aufnahmebereich und/oder die Optikeinheit mit Spiel in dem Basiskörper bzw. dem Deckel angeordnet sind, was eine Justierung, z.B. nach oder während der Montage des Deckels überhaupt erst ermöglicht. Die Justierung kann dabei z.B., wie weiter unten erwähnt, mittels einer Lehre erfolgen, die auf den Aufnahmebereich aufgesetzt wird und dann bei Absenken des Deckels in die Arbeitsstellung die Optikeinheit justiert ausrichtet.

Damit diese ausgerichtete Position von Optikeinheit und Aufnahmebereich während des Betriebs des Thermocyclers wiederholt und ohne erneute Justierung eingestellt werden kann, sind die Positioniereinrichtungen vorgesehen.

Während der Justierung werden die in dem erfindungsgemäßen Cycler vorgesehenen Positioniereinrichtungen paarweise zueinander ausgerichtet und in der dann eingenommenen Position fixiert, soweit sie z.B. verschiebbar aufgenommen sind. Nach der Fixierung sind alle Positioniereinrichtungen bezüglich ihres Position zu dem Aufnahmebereich bzw. der Optikeinheit ortsfest. Im Betrieb des Gerätes genügt es, die Positioniereinrichtungen zueinander auszurichten, womit dann automatisch Optikeinheit und Aufnahmebereich zueinander justiert sind.

Vorteilhafte Ausgestaltungen der Erfindung sind in den Unteransprüchen angegeben.

Die erwähnte Justierung erfolgt bei Betrieb im Real-Time Modus. Um den Basiskörper, der nicht zwingend im Real-Time Modus betrieben werden muss, nicht unnötig aufwändig zu gestalten, ist sinnvoll, dass die für die Justierung erforderlichen Einrichtungen lediglich im Deckel vorgesehen sind. Eine bevorzugte Ausgestaltung sieht daher vor, dass lediglich die Optikeinheit mit Spiel im Deckel aufgenommen ist, während der Aufnahmebereich im Basiskörper ortsfest ist.

Denkbar sind eine Reihe unterschiedlicher geeigneter Positioniereinrichtungen. Möglich ist z.B., dass es sich bei den Positioniereinrichtungen lediglich um detektierbare Markierungen handelt, die jeweils bei Verbringen des Deckels in die Arbeitsstellung zuneinander zentriert werden müssen. Denkbar wäre z.B., im Basiskörper als Positioniereinrichtung Leuchtdioden vorzusehen und im Deckel zugeordnete Lochschablonen. Mittels einer Detektionseinrichtung könnte dann z.B. die durch die Löcher in den Schablonen hindurchtretende Lichtintensität gemessen und zur Einstellung der justierten Position durch z.B. Verschieben der Optikeinheit auf einen maximalen Wert eingestellt werden. Denkbar sind z.B. auch magnetische oder elektrische Positioniereinrichtungen, um nur einige Beispiele zu nennen.

Bevorzugt werden jedoch Positioniereinrichtungen vorgesehen, die bei Verbringen des Deckels in Arbeitsstellung in Führungseingriff gelangen und dann Aufnahmebereich und Optikeinheit automatisch in der justierten Position zueinander ausrichten.

Eine besonders bevorzugte Ausgestaltung der Erfindung sieht in diesem Zusammenhang vor, dass z.B. am Basiskörper als Positioniereinrichtungen dienende

Führungsstifte vorgesehen sind, die mit Buchsen am Deckel in Formschlusseingriff gelangen.

Da, wie oben angesprochen, der Basiskörper nicht zwingend ausschließlich für Real-Time-Zwecke gedacht ist, kann z.B. vorgesehen sein, dass nicht nur die Optikeinheit im Deckel mit Spiel aufgenommen ist, während der Aufnahmebereich fest in dem Basiskörper angeordnet ist, sondern dass gleichermaßen auch nur die am Deckel vorgesehenen Positioniereinrichtungen bezüglich ihres Abstandes zu der Optikeinheit einstellbar und fixierbar ausgebildet sind, während die Positioniereinrichtungen am Basiskörper nicht einstellbar, also dauerhaft ortsfest vorgesehen sind.

Wie oben angesprochen, erfolgt die Justierung von Optikeinheit und Aufnahmebereich während der Montage bevorzugt mittels einer Lehre. Es handelt sich dabei z.B. um eine Einrichtung, die definiert am Aufnahmebereich angeordnet werden kann und z.B. nach oben weisende Leitkanten etc. aufweist, die in Eingriff mit entsprechend vorgesehenen Gegenwänden am unteren Ende der Optikeinheit gelangen und diese dann entsprechend in die justierte Position verschieben.

Im folgenden soll die Erfindung an Hand von zwei Abbildungen näher erläutert werden.
- Fig. 1: zeigt schematisch eine geschnittene Vorderansicht des erfindungs- gemäßen Thermocyclers, wobei die Optikeinheit zusätzlich entlang der in Fig 2 dargestellten Linie I-I geschnitten ist.
- Fig. 2: zeigt eine Draufsicht auf die Optikeinheit des erfindungsgemäßen Thermocyclers.

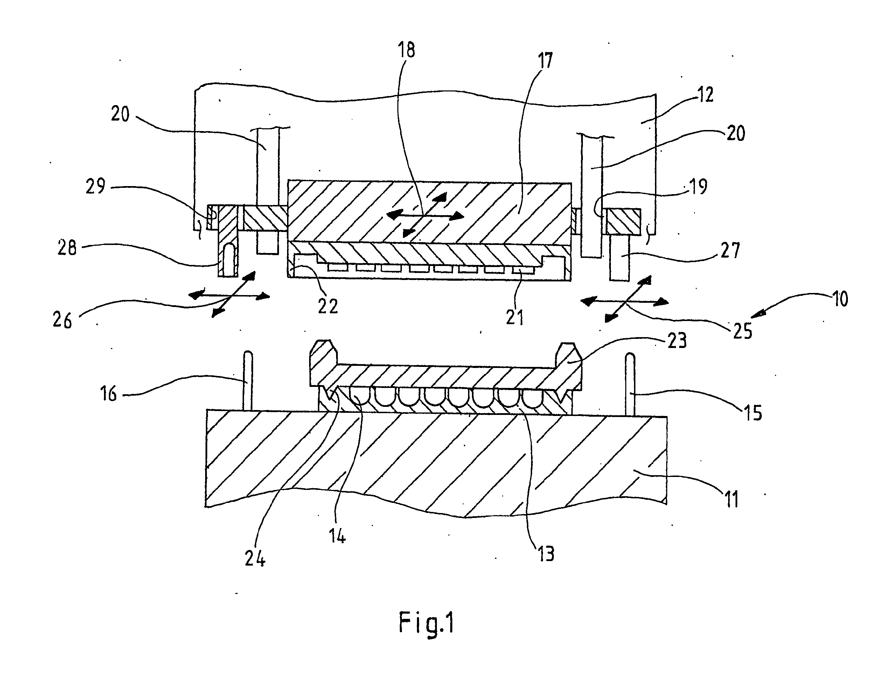

Fig. 1 zeigt einen Thermocycler 10 mit einem Basiskörper 11 und einem Deckel 12. Der Basiskörper 11 weist einen temperierbaren Aufnahmebereich 13 mit Aufnahmen 14 für Reaktionsgefäße auf.

An dem Basiskörper 11 sind als Stifte 15 und 16 ausgebildete Positioniereinrichtungen angeordnet. Die Positioniereinrichtungen 15 und 16 sind ortsfest und in definiertem Abstand zu dem ebenfalls ortsfesten Aufnahmebereich 13.

In dem Deckel 12 ist eine Optikeinheit 17 mit Spiel in Richtung des Pfeiles 18 über Bohrungen 19 an Haltestangen 20 gelagert. Die Bohrungen 19 haben einen etwas größeren Durchmesser als die Haltestangen, wodurch das Spiel ermöglicht wird.

An dem unteren Ende der Optikeinheit 17 sind Messöffnungen 21 vorgesehen. Außerdem weist das untere Ende einen Rahmen 22 auf. Der Rahmen 22 ist so ausgeformt, dass er in Justiereingriff mit einer Lehre 23 gelangen kann, die im gezeigten Fall mittels Zapfen 24 definiert an dem Aufnahmebereich 13 aufgesetzt ist.

Wird der Deckel 12 abgesenkt, so gelangt der Rahmen 22 in Eingriff mit der Lehre 23 und verschiebt dabei im gezeigten Fall die Optikeinheit 17 nach rechts, wobei sich die Optikeinheit 17 bzw. deren Messöffnungen 21 zu den Aufnahmen 14 für die Reaktionsgefäße justiert ausrichten.

Weiterhin sind in dem Deckel als Positioniereinrichtungen in Richtung der Pfeile 25 und 26 in Nuten 29, 30 verstellbare Buchsen 27 und 28 angeordnet.

Während der Justierung der Optikeinheit 17 zu dem Aufnahmebereich 13 werden die Buchsen 27 und 28 in formschlüssigen Eingriff mit den Stiften 15 und 16 gebracht, was auf Grund der Verstellbarkeit der Buchsen ohne weiteres möglich ist. Sobald die Optikeinheit 17 über die Lehre 23 zu dem Aufnahmebereich 13 justiert ist und die Stifte 15 und 16 die Buchsen 27 und 28 gefangen haben, können die Buchsen 27 und 28 durch nicht gezeigte Einrichtungen, z.B. Schrauben etc. in ihren jeweiligen Positionen fixiert werden. Die Buchsen 27 und 28 können dann nicht mehr in Richtung der Pfeile 25 und 26 bewegt werden. Sie sind vielmehr relativ zu der Optikeinheit 17 ortsfest und können nur noch mit dieser zusammen in Richtung des Pfeiles 18 bewegt werden.

Die mittels der Lehre 23 festgelegte Justierposition der Optikeinheit 17 kann also bei jedem Absenken durch Ineingriffbringen der Stifte 15 und 16 mit den Buchsen 27 und 28 reproduziert hergestellt werden.

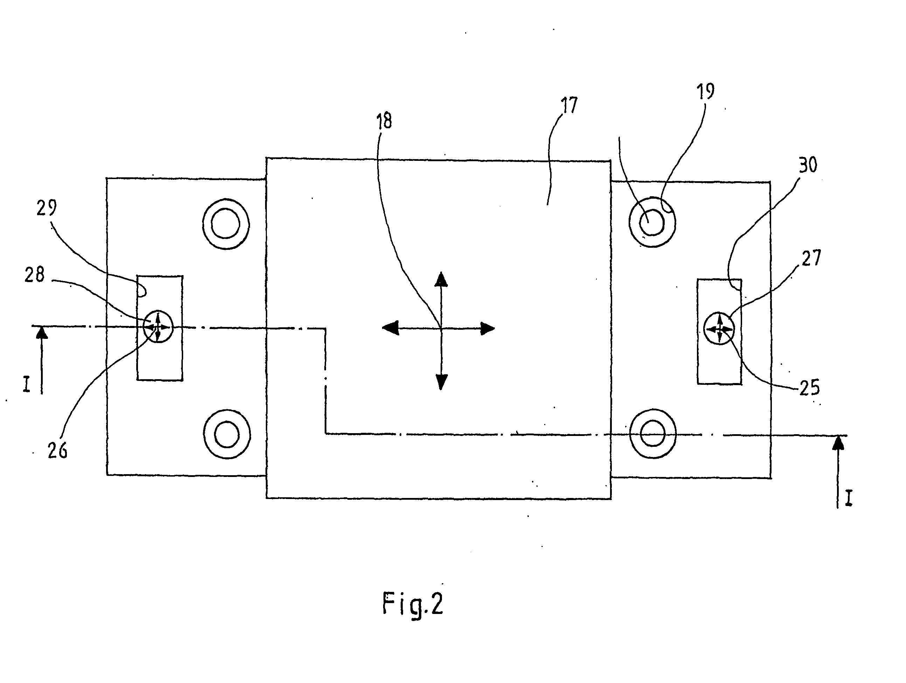

Zum besseren Verständnis sei auf Fig. 2 verwiesen, die eine Draufsicht auf die Optikeinheit 17 aus Fig. 1 zeigt.

Man erkennt, dass die Optikeinheit 17, über vier Bohrungen 19 an Haltestangen 20 mit Spiel in Richtung des Pfeiles 18 gelagert ist. Weiterhin dargestellt sind die Buchsen 27 und 28, die in Richtung der Pfeile 26 und 25 in Nuten 29, 30 verstellbar und mittels einem nicht dargestellten Element in einer eingestellten Position fixierbar sind.

## Patentansprüche

1. Thermocycler mit einem Basiskörper, der einen temperierbaren Aufnahmebereich für Reaktionsgefäße aufweist, und mit einem an den Basiskörper montierbaren Deckel, der in montiertem Zustand aus einer geöffneten Position, in der der Aufnahmebereich zum Einsetzen und zur Entnahme der Reaktionsgefäße zugänglich ist, in eine Arbeitsstellung über den Aufnahmebereich bringbar ist, wobei in dem Deckel eine Optikeinheit angeordnet ist, die in Arbeitsstellung des Deckels Licht in die Reaktionsgefäße einstrahlt und/oder aus den Reaktionsgefäßen austretendes Licht aufnimmt, **dadurch gekennzeichnet, dass** Optikeinheit (17) und/oder Aufnahmebereich (13) mit Spiel in dem Deckel (12) bzw. Basiskörper (11) aufgenommen sind, wobei das Spiel eine für eine Justierung der Optikeinheit (17) zu dem Aufnahmebereich (13) ausreichende Relativbewegung zwischen Optikeinheit (17) und Aufnahmebereich (13) erlaubt, und am Basiskörper (11) und Deckel (12) jeweils mindestens 2 Positioniereinrichtungen (15, 16; 27, 28) vorgesehen sind, wobei jeder Positioniereinrichtung (15, 16) am Basiskörper (11) jeweils eine Positioniereinrichtung (27, 28) am Deckel (12) zugeordnet ist, und jeweils mindestens eine dieser beiden einander zugeordneten Positioniereinrichtungen (27, 28) bezüglich ihrer Position zu dem Aufnahmebereich (13) oder der Optikeinheit (17) einstellbar und in einer eingestellten Position ortsfest zu dem Aufnahmebereich (13) und/oder der Optikeinheit (17) fixierbar ist, dergestalt, dass bei der Justierung der Optikeinheit (17) zu dem Aufnahmebereich (13) eine Ausrichtung der zugeordneten Positioniereinrichtungen (15, 27; 16, 28) zueinander und dauerhafte Fixierung möglich ist.

2. Thermocycler nach Anspruch 1, **dadurch gekennzeichnet, dass** nur die Optikeinheit (17) mit Spiel in dem Deckel (12) aufgenommen ist.

3. Thermocycler nach Anspruch 1 oder 2, **dadurch gekennzeichnet, dass** die Positioniereinrichtungen (15, 16; 27, 28) bei Verbringen des Deckels in die Arbeitsstellung (12) den Aufnahmebereich (13) und die Optikeinheit (17) automatisch in der justierten Position zueinander ausrichten.

4. Thermocycler nach Anspruch 3, **dadurch gekennzeichnet, dass** die einander zugeordneten Positioniereinrichtungen (15, 27; 16, 28) jeweils als miteinander in Formschlusseingriff bringbare Buchse und Stift ausgebildet sind.

5. Thermocycler nach Anspruch 3 oder 4, **dadurch gekennzeichnet, dass** nur die am Deckel (12) vorgesehenen Positioniereinrichtungen (27, 28) bezüglich ihrer Position einstellbar sind.

6. Thermocycler nach einem der vorhergehenden Ansprüche, **dadurch gekennzeichnet, dass** die Optikeinheit (17) Einrichtungen (22) aufweist, die eine Justierung zu dem Aufnahmebereich (13) mittels einer auf dem Aufnahmebereich anordenbaren Lehre (23) ermöglichen.

## Claims

1. A thermocycler, comprising a base fitted with a temperature-controlled receiving segment of reaction vials, and further comprising a top which can be mounted on the base and which in its assembled state can be displaced from an open position wherein the receiving segment is accessible for purposes of inserting and removing the reaction vials, into an operational position above the receiving segment, with an optic unit being configured in the top which in its operational position radiates light into the reaction vials and/or detects light issuing from the reaction vessels, **characterized in that** the optic unit (17) and/or the receiving segment (13) are received with play in the top (12) respectively the base (11), the play allowing adequately mutually adjusting the optic unit (17) and the receiving segment (13) and **in that** at least 2 positioning elements (15, 16; 27, 28) are present both in the base (11) and in the top (12), each positioning element (27, 28) at the top (12) being associated with a positioning element (15, 16) at the base (11) and **in that** at least one of these two mutually associated positioning elements (27, 28) is adjustable in position relative to the receiving segment (13) or to the optic unit (17) and is affixable in a set position to be stationary relative to the receiving segment (13) and/or the optic unit (17) in a manner that adjusting the optic unit (17) relative to the receiving segment (13) allows mutually aligning the associated positioning elements (15, 27; 16,28) into permanent affixation.

2. Thermocycler as claimed in claim 1, **characterized in that** only the optic unit (17) is received with play in the top (12).

3. Thermocycler as claimed in either of claims 1 and 2, **characterized in that** when the top is moved into its operational position (12), the positioning elements (15, 16; 27, 28) automatically align the receiving segment (13) and the optic unit (17) into their adjusted position.

4. Thermocycler as claimed in claim 3, **characterized in that** the mutually associated positioning elements (15, 27; 16, 28) are bushes and pins that engage each other in mutually interlocking manner.

5. Thermocycler as claimed in either of claims 3 and 4, **characterized in that** only the positioning elements (27, 28) configured at the top (12) can be adjusted in position.

6. Thermocycler as claimed in one of the above claims, **characterized in that** the optic unit (17) comprises elements (22) allowing adjusting it relative to the receiving segment (13) by means of a gauge (23) mounted on said segment.

## Revendications

1. Thermocycleur avec un corps de base présentant une zone de réception des récipients de réaction pouvant être tempérée, et avec un couvercle pouvant être monté sur le corps de base et, à l'état monté, être ramené d'une position ouverte permettant d'accéder à la zone de réception pour y mettre en place ou en retirer les récipients de réaction en une position fonctionnelle au-dessus de la zone de réception, l'intérieur du couvercle étant équipé d'une unité optique laquelle, en position fonctionnelle du couvercle, émet de la lumière dans les récipients de réaction et/ou enregistre de la lumière émise par ceux-ci, **caractérisé en ce que** l'unité optique (17) et/ou la zone de réception (13) sont respectivement placées dans le couvercle (12) et le corps de base (11) avec un jeu propre à assurer un entre l'unité optique (17) et la zone de réception (13) déplacement relatif suffisant pour permettre un ajustage de l'unité optique (17) par rapport à la zone de réception (13), le corps de base (11) et le couvercle (12) présentant chacun au moins 2 dispositifs de positionnement (15, 16 ; 27, 28) tels qu'à chacun des dispositifs de positionnement (15, 16) du corps de base (11) corresponde respectivement un dispositif de positionnement (27, 28) du couvercle (12), l'un au moins de ces deux dispositifs de positionnement (27, 28) correspondants pouvant être ajusté quant à sa position par rapport à la zone de réception (13) ou l'unité optique (17) et pouvant, en position ajustée, être fixé par rapport à la zone de réception (13) et/ou l'unité optique (17) de telle sorte que, lors de l'ajustage de l'unité optique (17) par rapport à la zone de réception (13), un alignement des dispositifs de positionnement correspondants (15, 27; 16, 28) les uns sur les autres et une fixation durable soient possibles.

2. Thermocycleur selon la revendication 1, **caractérisé en ce que** seule l'unité optique (17) est placée avec un certain jeu dans le couvercle (12).

3. Thermocycleur selon la revendication 1 ou 2, **caractérisé en ce que** les dispositifs de positionnement (15, 16 ; 27, 28) assurent automatiquement l'alignement de la zone de réception (13) et de l'unité optique (17) l'une sur l'autre en position ajustée lorsque le couvercle est placé en position fonctionnelle (12).

4. Thermocycleur selon la revendication 3, **caractérisé en ce que** les dispositifs de positionnement correspondants (15, 27 ; 16, 28) sont respectivement réalisés sous forme de broche et de douille de formes complémentaires permettant un engagement positif de l'une dans l'autre.

5. Thermocycleur selon la revendication 3 ou 4, **caractérisé en ce que** seuls les dispositifs de positionnement (27, 28) prévus dans le couvercle (12) sont ajustables quant à leur position.

6. Thermocycleur selon l'une des revendications précédentes **caractérisé en ce que** l'unité optique (17) présente des dispositifs (22) qui permettent un ajustage par rapport à la zone de réception (13) au moyen d'un calibre (23) pouvant être positionné sur la zone de réception.
